Europäisches Patentamt

European Patent Office

Office européen des brevets

(11) Numéro de publication : **0 294 279 B1**

(12) **FASCICULE DE BREVET EUROPEEN**

(45) Date de publication du fascicule du brevet :
04.12.91 Bulletin 91/49

(51) Int. Cl.⁵ : **F16J 15/16, G01D 5/26**

(21) Numéro de dépôt : **88401300.4**

(22) Date de dépôt : **27.05.88**

(54) **Enceinte étanche comportant une sortie d'arbre.**

(30) Priorité : 27.05.87 FR 8707503

(43) Date de publication de la demande :
07.12.88 Bulletin 88/49

(45) Mention de la délivrance du brevet :
04.12.91 Bulletin 91/49

(84) Etats contractants désignés :
DE GB IT

(56) Documents cités :
DE-A- 3 439 225
GB-A- 781 859
US-A- 3 764 233
E. SCHMID et al.: "Handbuch der Dichtungstechnik", 1981, pages 256-259, Expert Verlag,
Grafenau, DE

(73) Titulaire : **SEXTANT AVIONIQUE S.A.**
**Immeuble le Galilée Parc Tertiaire de Meudon**
**5/7 rue Jeanne Braconnier**
**F-92366 Meudon la Forêt Cédex (FR)**

(72) Inventeur : **Cognard, Alain**
**13 rue des Graviers**
**F-92160 Antony (FR)**
Inventeur : **Coppin, Jean-Marc**
**19 rue Sacco et Vanzetti**
**F-94190 Villeneuve St Georges (FR)**

(74) Mandataire : **Bloch, Gérard et al**
**2, square de l'Avenue du Bois**
**F-75116 Paris (FR)**

## Description

La présente invention concerne une enceinte étanche pour isoler d'un milieu environnant un organe entraîné par un arbre passant à travers une ouverture dans une paroi de l'enceinte, et plus particulièrement, bien que non exclusivement, un boîtier pour un dispositif de détection de déplacement à bord d'un avion.

On sait qu'à bord d'un avion il est nécessaire de prévoir des dispositifs de contrôle à distance de la position de certains composants de l'avion, ces dispositifs comprenant un organe lié rigidement aux composants dont on souhaite détecter la position et des moyens de détection proprement dits reliés par un moyen de liaison à un poste de contrôle à distance. A titre d'exemple, on utilise de façon courante un détecteur de position dont l'organe de détection est constitué par un disque comportant une fente de largeur décroissante, le disque étant disposé en regard de cellules optiques et étant associé à un arbre relié rigidement à l'objet dont on souhaite mesurer la position. Afin d'éviter des perturbations de la mesure optique effectuée par les cellules, il est préférable que celles-ci ainsi que le disque associé soient disposés dans une enceinte étanche de préférence remplie avec un gaz inerte tel que de l'azote. Un problème survient lorsque de tels dispositifs sont montés à bord d'un avion qui doit passer d'une température au sol de l'ordre de 20° et d'une pression au sol de l'ordre de 1 · 10⁵ Pa, à une température et une pression à l'altitude de croisière respectivement d'environ −56°C et 0,2 · 10⁵ Pa.

En effet, lorsque l'avion passe du sol à l'altitude de croisière, la variation de pression provoque une expulsion d'une partie du gaz contenu dans l'enceinte et, lors du retour au sol de l'avion, de l'air environnant a tendance à vouloir pénétrer à nouveau dans l'enceinte. Si l'enceinte n'est pas étanche, l'air environnant pénètre effectivement dans l'enceinte et, comme cet air environnant contient généralement de l'humidité, cette humidité se condense lors des variations de température auxquelles l'avion est soumis, ce qui perturbe la mesure effectuée par le dispositif optique. Si au contraire l'enceinte est étanche, l'air environnant l'enceinte étanche au niveau du sol exerce une pression sur le joint qui entoure l'arbre de commande des déplacements de l'organe de mesure, ce qui provoque un frottement important du joint sur l'arbre et donc un couple résistant au mouvement imprimé à l'arbre par le composant dont on souhaite mesurer les déplacements. Dans un cas comme dans l'autre le fonctionnement du dispositif de mesure n'est pas satisfaisant.

Pour remédier à cet inconvénient, la demande DE-A-3439225 propose une membrane flexible fixée de façon étanche à l'enceinte, soumise d'un côté à la pression à l'intérieur de l'enceinte et de l'autre à la pression du milieu gazeux environnant pour réduire la différence de pression de part et d'autre dudit joint.

Ainsi, l'étanchéité est maintenue sans soumettre l'arbre à des contraintes de frottement trop importantes lors des variations de température ou de pression auxquelles l'enceinte est soumise.

Cependant, le dispositif décrit dans la demande DE A-3439225 implique la réalisation d'une membrane à soufflet, cette membrane étant, de plus, d'un encombrement relativement important si les variations de volume de l'enceinte sont importantes.

Par ailleurs, dans ce dispositif connu, il faut qu'il existe une différence de pression, aussi minime soit elle, pour maintenir le soufflet déformé dans une position autre que sa position de repos, ce qui fait que la pression à l'intérieur de l'enceinte n'est pas rigoureusement égale à la pression à l'extérieur lorsque le soufflet est déformé. La présente invention vise à pallier les inconvénients précédents.

A cet effet, elle a pour objet une enceinte étanche délimitant un volume interne rempli d'un gaz pour isoler d'un milieu gazeux environnant au moins un organe entraîné par un arbre passant à travers une ouverture de passage d'arbre dans une paroi de l'enceinte, cette ouverture comprenant un joint assurant une étanchéité entre l'arbre et la paroi environnante, et une membrane flexible fixée de façon étanche à l'enceinte, soumise d'un côté à la pression à l'intérieur de l'enceinte et de l'autre à la pression du milieu gazeux environnant pour réduire la différence de pression de part et d'autre dudit joint, caractérisé par le fait que ladite membrane est fixée pour présenter, sans création de tension en son sein, une section en U, une partie de la membrane étant déplaçable librement, sans création de tension au sein de la membrane, pour modifier, par retournement progressif de la membrane, sa section en U jusqu'à inversion de son orientation.

Ainsi le volume interne de l'enceinte étanche s'adapte instantanément aux conditions de température et de pression environnantes.

D'autres caractéristiques et avantages de l'invention apparaîtront à la lecture de la description qui suit en liaison avec les dessins ci-joints parmi lesquels :

— la figure 1 est une vue en coupe partiellement schématique d'un dispositif selon l'invention lorsque l'avion est au sol,

— la figure 2 est une vue en coupe analogue à celle de la fig. 1 lorsque l'avion est en vol à une altitude de croisière.

En référence aux dessins, le dispositif selon l'invention comporte d'une façon classique une paroi latérale cylindrique 1 fermée à une extrémité par un fond 2 et à l'autre extrémité par un couvercle 3 fixé à la paroi latérale cylindrique par des moyens appropriés non représentés. Une paroi 4 s'étend parallèlement au fond 2 et est montée de façon étanche dans le dispositif, par exemple au moyen d'un joint torique disposé entre le bord de la paroi 4 et la face interne de la paroi latérale 1. Un organe 5 est disposé à l'intérieur de l'enceinte ainsi réalisée, ici un disque de détection, et est entraîné en rotation par un arbre de commande 6 soutenu à l'intérieur de l'enceinte par des paliers 7 et s'étendant à travers une ouverture 8 de passage d'arbre prévue dans le fond 2, l'étanchéité entre l'arbre de commande 6 et la paroi environnante étant assurée par un joint d'étanchéité 9, par exemple un joint à lèvres. La position du disque de détection 5 à l'intérieur de l'enceinte est détectée au moyen d'un dispositif optique comprenant des cellules 10 reliées à un câble optique 11 passant de façon étanche à travers la paroi 4 et maintenu au niveau du couvercle 3 par un bouchon 12.

Selon l'invention, on prévoit dans la paroi latérale 1 une série d'ouvertures 13 et une membrane flexible 14 disposée à l'intérieur de l'enceinte en regard des ouvertures 13 et ayant des extrémités fixées de façon étanche à l'intérieur de l'enceinte de part et d'autre des ouvertures 13. Ainsi, une face de la membrane souple 14 est soumise à la pression de l'intérieur de l'enceinte et une face opposée est soumise à la pression de l'extérieur de l'enceinte de sorte que la membrane prend automatiquement une position d'équilibre dans laquelle il y a égalité de la pression interne de l'enceinte et de la pression externe à l'enceinte. On notera à ce propos que la membrane est de préférence montée sans tension entre ses points de fixation de sorte que la variation du volume interne de l'enceinte se fait par déplacement de la membrane sans création de tension au sein de la membrane.

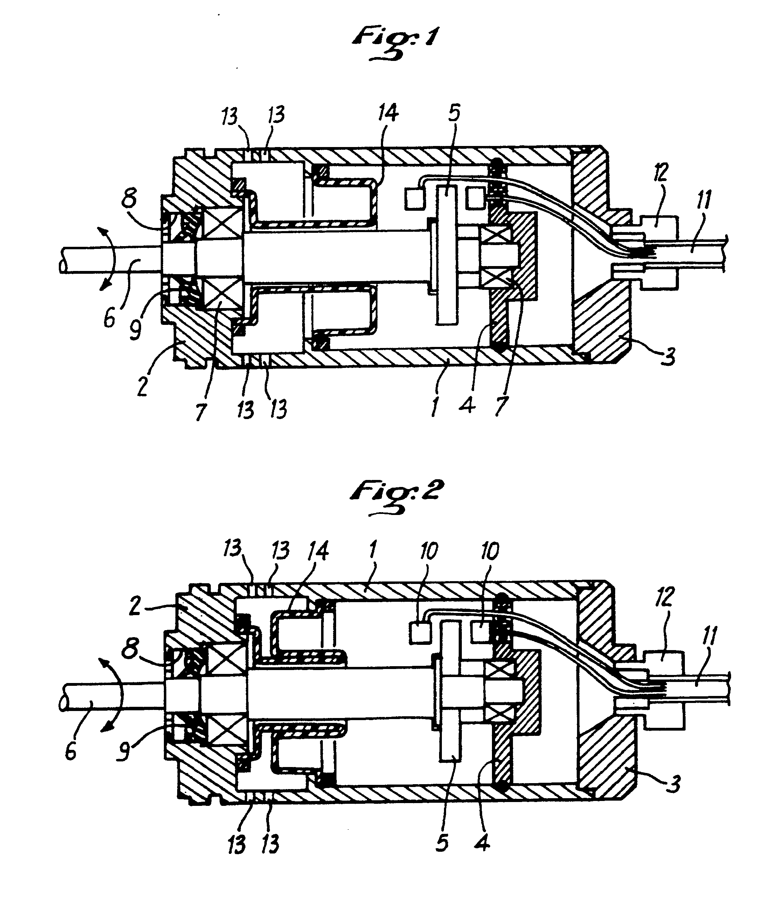

La figure 1 illustre la position prise par la membrane 14, par exemple lorsque l'avion est au sol. La membrane 14 est ici une membrane annulaire qui, compte tenu de l'équilibre des pressions entre l'intérieur et l'extérieur de l'enceinte, prend une forme de gouttière à section en U tourné vers les ouvertures 13. Au contraire, lorsque l'avion est en altitude, c'est-à-dire avec une pression externe relativement faible, le volume du gaz contenu dans l'enceinte s'accroît et la membrane 14 prend alors la position représentée sur la figure 2 par déplacement d'une partie de la membrane vers les ouvertures 13. Etant donné que la variation de pression externe est absorbée par une variation du volume interne de l'enceinte, le joint d'étanchéité 9 ne se trouve soumis à aucune différence de pression et l'arbre 6 est donc soumis à un couple de frottement résistant constant.

On notera que pour éviter que la membrane 14 ne se trouve plaquée sur une paroi rigide de l'enceinte, ce qui impliquerait la naissance de contraintes au sein de la membrane et donc un déséquilibre de pression entre l'intérieur et l'extérieur de l'enceinte, on prévoira de façon avantageuse les conditions extrêmes de température et de pression auxquelles le dispositif sera soumis afin de prévoir le débattement correspondant de la membrane, ce débattement pouvant résulter soit d'une variation de la pression externe à l'enceinte, soit d'une variation de la température de l'enceinte, soit encore d'une variation combinée de la pression externe et de la température de l'enceinte.

Bien entendu l'invention n'est pas limitée au mode de réalisation décrit et on peut y apporter des variantes de réalisation sans sortir du cadre de l'invention. En particulier, bien que l'invention ait été décrite plus particulièrement en liaison avec un organe 5 monté sur un arbre 6 tournant, une disposition analogue pourrait être adoptée avec un arbre coulissant. De même, bien que l'invention ait été décrite en liaison avec une membrane flexible annulaire en regard d'une série de petites ouvertures 13, on peut prévoir une seule ouverture 13 de grande dimension qui est fermée par une membrane flexible circulaire.

## Revendications

1. Enceinte étanche délimitant un volume interne rempli d'un gaz pour isoler d'un milieu gazeux environnant au moins un organe (5) entraîné par un arbre (6) passant à travers une ouverture (8) de passage d'arbre dans une paroi de l'enceinte, cette ouverture (8) comprenant un joint (9) assurant une étanchéité entre l'arbre et la paroi environnante, et une membrane flexible fixée de façon étanche à l'enceinte, soumise d'un côté à la pression à l'intérieur de l'enceinte et de l'autre à la pression du milieu gazeux environnant pour réduire la différence de pression de part et d'autre dudit joint (9), caractérisé par le fait que ladite membrane (14) est fixée pour présenter, sans création de tension en son sein, une section en U, une partie de la membrane (14) étant déplaçable librement, sans création de tension au sein de la membrane (14), pour modifier, par retournement progressif de la membrane (14), sa section en U jusqu'à inversion de son orientation.

## Patentansprüche

1. Abgedichtetes, einen mit Gas gefüllten Innenraum abgrenzendes Gehäuse, um mindestens ein Organ (5), das von einer durch eine Wellendurchgangsöffnung (8) in einer Wand des Gehäuses gehende Welle (6) angetrieben wird, von einem umgebenden gasförmigen Medium zu trennen, wobei diese Öffnung (8) eine Dichtung (9) umfaßt, welche die Dichtheit zwischen der Welle und der umgebenden Wand gewährleistet, und eine biegsame, dicht am Gehäuse befestigte Membran, welche einerseits dem Druck im Inneren des Gehäuses und andererseits dem Druck des umgebenden gasförmigen Mediums ausgesetzt ist, um den Druckunterschied zu beiden Seiten der genannten Dichtung (9) zu verringern, dadurch gekennzeichnet, daß die genannte Membran (14) so befestigt ist, daß sie, ohne Spannung in ihrem Inneren zu erzeugen, einen U-förmigen Querschnitt aufweist, wobei ein Teil der Membran (14) frei verschiebbar ist, ohne Spannung im Inneren der Membran (14) zu erzeugen, um durch schrittweises Umschlagen der Membran (14) den U-förmigen Querschnitt zu verändern, bis sie umgekehrt ausgerichtet ist.

## Claims

1. Sealed enclosure defining an internal volume filled with a gas in order to isolate from a surrounding gaseous medium at least one member (5) driven by a shaft (6) passing through an opening (8) for the passage of the shaft in a wall of the enclosure, this opening (8) comprising a seal (9) ensuring sealing between the shaft and the surrounding wall, and a flexible membrane fixed in a sealed manner to the enclosure, subject on one side to the pressure inside the enclosure and on the other side to the pressure of the surrounding gaseous medium in order to reduce the pressure difference on either side of said seal (9), characterised by the fact that said membrane (14) is fixed in order to have, without creating tension in its inside, a U-section, one part of the membrane (14) being able to move freely, without creating tension within the membrane (14), in order to modify, by progressive reversal of hte membrane (14), its U-section until its orientation is reversed.

Fig:1

Fig:2

5